(19) Europäisches Patentamt
European Patent Office
Office européen des brevets

(11) **EP 2 655 906 B1**

(12) **EUROPEAN PATENT SPECIFICATION**

(45) Date of publication and mention
of the grant of the patent:
**03.08.2016 Bulletin 2016/31**

(51) Int Cl.:
*F16C 23/08* (2006.01)     *F16C 33/36* (2006.01)
*F16C 33/58* (2006.01)     *F16C 33/66* (2006.01)

(21) Application number: **10796290.4**

(86) International application number:
**PCT/EP2010/007828**

(22) Date of filing: **21.12.2010**

(87) International publication number:
**WO 2012/083981 (28.06.2012 Gazette 2012/26)**

(54) **BEARING WITH MODIFIED SPHERICAL GEOMETRY**

LAGER MIT MODIFIZIERTER SPHÄRISCHER GEOMETRIE

PALIER À GÉOMÉTRIE SPHÉRIQUE MODIFIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2013 Bulletin 2013/44**

(73) Proprietor: **Aktiebolaget SKF
415 50 Göteborg (SE)**

(72) Inventors:
• **LUGT, Pieter, Martin
NL-4132 BB Vianen (NL)**
• **VAN ZOELEN, Marco
NL-3994 HK Houten (NL)**
• **VENNER, Cornelis Henricus
NL-7521 HW Enschede (NL)**

(56) References cited:
**DE-A1- 4 435 831     DE-A1-102009 024 122
US-A- 2 142 478     US-A- 4 557 613
US-A- 4 565 457     US-A1- 2008 267 551**

**Description**

FIELD OF THE INVENTION

The present invention relates to bearings comprising spherical rolling contact surfaces, which are curved in a longitudinal direction, perpendicular to a circumferential direction of the bearing. More particularly, the invention is directed to a modified geometry of such bearings, in which a radius of curvature of opposing rolling contact surfaces deviates from the pure spherical in a predetermined manner.

BACKGROUND

One example of a bearing that has rolling elements and raceways which are curved in a direction perpendicular to the circumferential direction is a spherical roller bearing. In what shall be designated as a "standard" spherical roller bearing, the bearing has two rows of rollers, which share a common sphered raceway in the outer ring, and two inner raceways inclined at an angle to the bearing axis. The outer raceway and the two inner raceways have a constant radius curvature, in longitudinal direction, and accommodate barrel-shaped rollers. Further, the rollers have a contour profile with a constant radius of curvature along the effective length of the roller.

Several examples of spherical roller bearings are known from the art, in which the raceways and/or the rollers deviate from the standard geometry defined above. In US 4929098, for example, a self-aligning roller bearing is described whereby the rollers have opposite end portions with one or more radii of curvature smaller than that of a central portion. In the central portion, which constitutes at least 80% of the roller length, the roller has a single radius of curvature. The roller geometry is modified in order to reduce edge stresses.

In US 4557613, a spherical bearing is disclosed in which the outer raceway has a larger radius of curvature than the inner raceway. Also, the rollers have a predetermined, varying curvature with at least two finite radii of curvature. The maximum radius of curvature is located at the centre of the roller, while the minimum radius of curvature is located towards opposite ends of the roller. In this bearing, the geometry has been modified to produce a pressure distribution under load that results in a residual frictional moment. The frictional moment influences roller skew, such that heat generation is reduced and bearing life is increased.

There is still room for improvement, however.

Document US 2,142,478 discloses a rolling element bearing according to the preamble of claim 1.

DISCLOSURE OF THE INVENTION

The present invention defines a bearing comprising spherical rolling contact surfaces, whereby the bearing is adapted to be lubricated, particularly with grease lubrication, and bearing geometry is modified so as to increase grease life and bearing life. Grease is a semi-solid lubricant that typically comprises a base oil and a thickener matrix. During bearing operation, it is base oil from the grease which lubricates the rolling contacts, whereby an oil film is formed between opposing rolling contact surfaces. When the supply of base oil to the rolling contacts is insufficient to form a fully-flooded contact inlet, the bearing is said to operate in a starved lubrication regime. As a result, the thickness of the oil film is reduced. One of the mechanisms that provides a supply of lubricant to the rolling contact surfaces, to replenish the oil film, is thought to be the bleeding of fresh base oil from a grease reservoir. The underside of a cage bar is one example of a grease reservoir within a bearing from where bleeding occurs. The bleeding process diminishes in time, meaning that the supply rate of fresh base oil is also reduced in time, ultimately leading to metal-to-metal contact between asperities on the rolling contact surfaces. The heat which is generated due to the metal-to-metal contact is thought to cause a redistribution of the grease, such that relatively fresh grease again becomes available as a source of bleeding, and film thickness is replenished. This starvation-replenishment cycle is repeated until the grease in the available grease reservoirs is no longer able to bleed base oil, meaning the end of grease life and of bearing life, if the grease is not replaced

Several factors influence the starvation mechanism that causes film thickness breakdown. One of these is side flow. A rolling element bearing has elastohydrodynamically lubricated (EHL) contacts. In other words, the contact pressures that the rolling elements and bearing raceways experience during bearing operation cause elastic deformation of these surfaces, which affects the thickness of the oil film. The contact pressures also result in a pressure distribution, which urges the oil to flow towards the sides of the raceways, leading to reduced film thickness. Thus, the centre of the contact becomes starved of lubricant. Since the centre of the contact, especially in a roller bearing, is relatively more remote from available lubricant reservoirs than the sides of the contact, replenishment at the contact centre is more difficult to achieve.

The object of the present invention is therefore to define a bearing as described above in which the contact interface between spherical rolling contact surfaces is modified so as minimize a pressure differential during bearing operation, such that side flow away from a central region of contact is minimized.

The aforementioned object is achieved by means of a bearing as defined in claim 1. The bearing comprises rolling elements, which have a first rolling contact surface, and further comprises inner an outer bearing raceways, which have a second rolling contact surface. According to the invention, at least one of the first and second rolling contact surfaces, which together form a contact interface, has a varying radius of curvature in longitudinal direction, such that a reduced radius of curvature of the contact interface varies according to a predetermined relationship. Specifically, the aforementioned reduced radius of curvature is maximized at a centre of the contact interface, such that locally, the contact interface approximates a line contact, and varies along the contact length according to a cosine function, to prevent large pressure spikes at the sides of the contact interface.

The aforementioned reduced radius of curvature is a composite radius of curvature that incorporates the radius of curvature in longitudinal direction of the first and second rolling contact surfaces of the contact interface.

Specifically, the reduced radius of curvature, $R_{y,new}(y)$, of the contact interface varies as a function of contact length according to the following relationship:

$$\frac{1}{R_{y,new(y)}} = \frac{1}{R_y} - A\frac{1}{R_y}\cos\left(\pi\frac{y}{b_{ref}}\right) \qquad \textit{[equation A]}$$

wherein,

y is a coordinate in longitudinal direction, whereby y = 0 at the contact centre;
A is a tuning factor;
$b_{ref}$ is a reference contact length;
$R_y$ is an imaginary, constant reduced radius of curvature in longitudinal direction of the contact interface, calculated according to:

$$R_y = \left(r_{y,rol}^{-1} + r_{y,rw}^{-1}\right)^{-1},$$

wherein
$r_{y,rol}$ is a constant radius of curvature, defined between 1st and 2nd endpoints of contact on the first rolling contact surface of the contact interface; and $r_{y,rw}$ is a constant radius of curvature, defined between 1st and 2nd endpoints of contact on the second rolling contact surface of the contact interface.

Thus, the second term on the right-hand side of equation [A] represents an adjustment factor for achieving a modified reduced radius of curvature, relative to an "unmodified", constant reduced radius of curvature ($R_y$) that is defined in relation to the endpoints of the contact interface. The varying reduced radius of curvature can be achieved by varying both the radius of curvature of the first rolling contact surface in longitudinal direction and the radius of curvature of the second rolling contact surface in longitudinal direction. Preferably, in the interests of manufacturing simplicity, the aforementioned radius of curvature of one of the first and second rolling contact surfaces is kept constant and the radius of curvature of the other of the first and second rolling contact surfaces is varied in accordance with the above relationship.

In a first embodiment of a bearing according to the invention, the bearing comprises a ball bearing, such as a deep groove ball bearing or an angular contact ball bearing. Suitably, the first rolling contact surface (of the balls) has a constant longitudinal radius of curvature and the second rolling contact surface (of the inner and /or outer raceway) has a longitudinal radius of curvature that varies in accordance with the invention. Such a configuration is preferable, as the balls do not spin about a fixed axis relative to the bearing raceways. The contact geometry would not remain constant during bearing operation if the balls had a varying curvature. When the bearing load conditions are known, the contact region on the raceways is known, and may be modified according to the invention.

In a second embodiment of a bearing according to the invention, the bearing is a roller bearing such as a spherical roller bearing or a toroidal roller bearing. In a roller bearing, the rollers do spin around a fixed axis relative to the bearing raceways, meaning that either raceway curvature (longitudinal radius of curvature of second rolling contact surface) or roller curvature (longitudinal radius of curvature of the first rolling contact surface) may be modified in accordance with the invention. The contact geometry will remain constant during bearing operation.

For ease of manufacture, it is advantageous to define a spherical rolling contact surface in terms of a radius relative to a rotational axis of symmetry, which varies as a function of contact length, $r_{rcs}(y)$, relative to a datum at the contact centre (at y = 0).

For a "standard" spherical rolling contact surface, which has a constant radius of curvature in longitudinal direction, the varying radius may be expressed as:

$$r_{rcs}(y) = r_{rcs,cc} + \sqrt{r_{y,rcs}^2 - y^2} - r_{y,rcs}$$ [equation B]

wherein

$r_{rcs,cc}$ is the (maximum) radius of the rolling contact surface at the contact centre, relative to the rotational axis of symmetry; and
$r_{y,rcs}$ is a constant radius of curvature of the rolling contact surface in longitudinal direction, defined between first and second endpoints of contact.

In a bearing according to the invention, whereby the curvature deviates from the pure spherical in the longitudinal (y) direction, an adjustment factor $\Delta r_{rcs}(y)$ is obtained via double integration of the adjustment factor defined in equation [A].
The new expression for the radius of the rolling contact surface as a function of contact length in (y) direction becomes:

$$r_{rcs,new}(y) = r_{rcs}(y) + \Delta r_{rcs}(y)$$ [Equation C]

When the rolling contact surface in question is an inner raceway or a surface of a roller, the adjustment factor is given by:

$$\Delta r_{rcs}(y) = -A\frac{b_{ref}^2}{\pi^2 R_y}\left( \cos\left(\pi\frac{y}{b_{ref}}\right) - 1 \right)$$ [equation D1]

Because an outer raceway is oppositely curved, the adjustment factor, when the rolling contact surface in question is an outer raceway, is given by:

$$\Delta r_{rcs}(y) = A\frac{b_{ref}^2}{\pi^2 R_y}\left( \cos\left(\pi\frac{y}{b_{ref}}\right) - 1 \right)$$ [equation D1]

wherein for both [D1] and [D2]:

y is the coordinate in the longitudinal direction;
A is the tuning parameter;
$b_{ref}$ is the reference contact length
$R_y$ is the constant reduced radius of curvature as defined in equation [A].

Relative to an "unmodified" rolling contact surface as defined by equation [B], a rolling contact surface according to the invention, which has the same radius at the contact centre, has more material in the central region of the contact interface. As a result, pressure is more evenly distributed in this central region, causing a reduction in side flow away from it.
As mentioned above, the rolling contact surface can be an outer surface of a spherical roller or a toroidal roller (first rolling contact surface), or a bearing raceway (second rolling contact surface). Modification of the roller automatically leads to a modified contact interface between two pairs of first and second rolling contact surfaces. To achieve the same effect via raceway modification, it will be necessary to modify the radius of the inner raceway and of the outer raceway. However, a beneficial effect is also achieved when the radius of only one raceway is modified according to equation [D1] or [D2].
Suitably, the reference contact length, $b_{ref,}$ in equations [A], [D1] and [D2] is equal to half the effective length of the contact interface.
Simulations of EHL contacts have shown that the tuning parameter, A, preferably has a value that lies between 0.7 and 1. Most preferably, the tuning parameter is equal to one.

The aforementioned simulations have also shown that in the central region of the contact interface, extending from the contact centre to approximately half way to either side, a flat pressure gradient is achieved. As a result, side flow is minimized, leading to reduced starvation in the central region. Ultimately, the effect of the invention is increased grease life and increased bearing life.

Other advantages of the invention will become apparent from the following detailed description and accompanying drawings.

BRIEF DESCRIPTION OF THE DRAWINGS

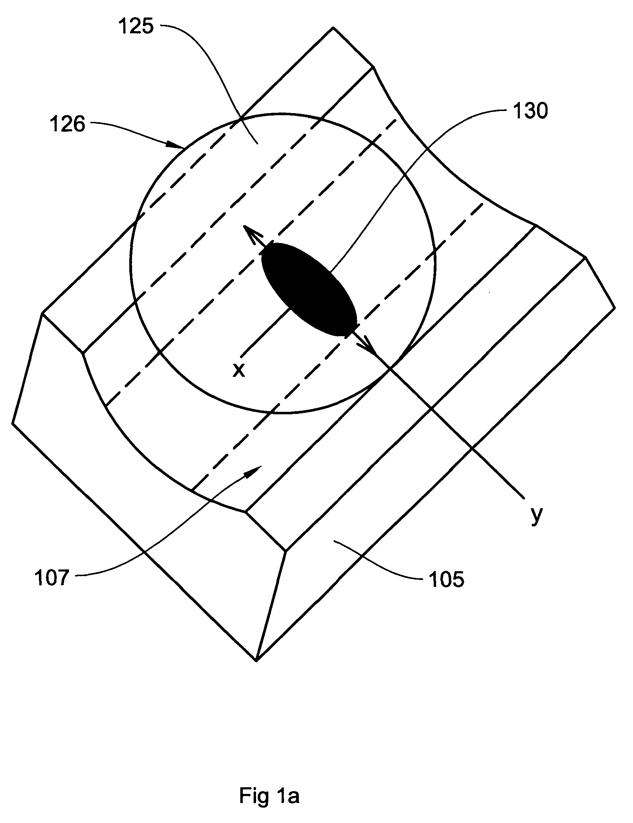

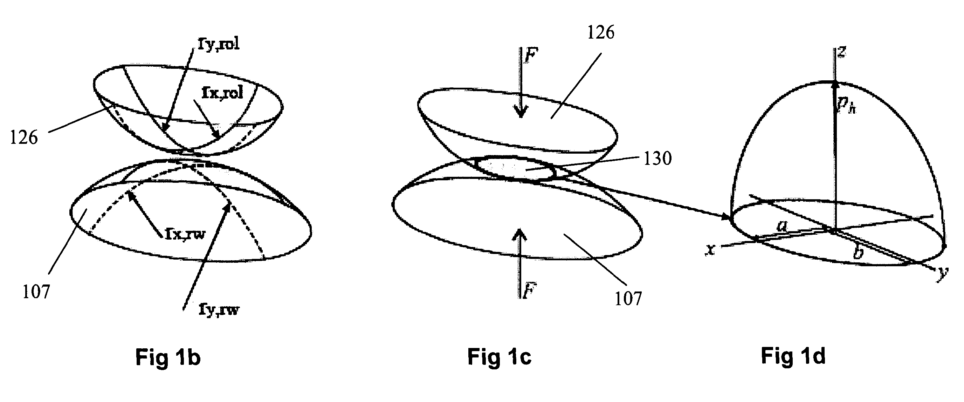

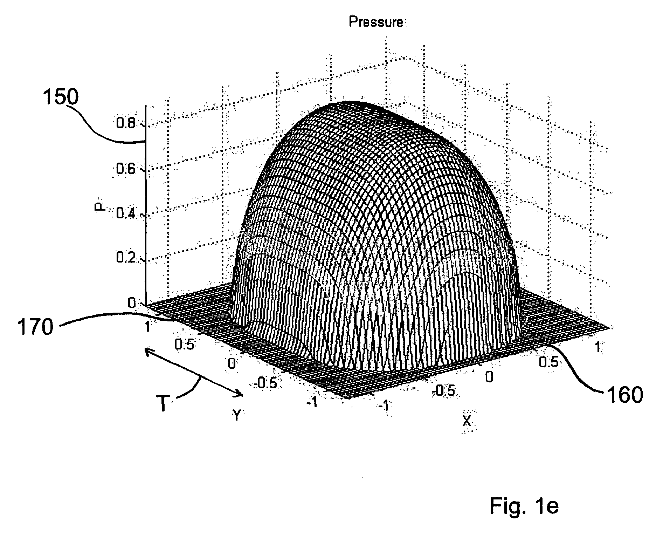

Fig. 1 a   shows part of an inner ring and a rolling element in a ball bearing according to the invention;
Fig. 1 b   shows the undeformed geometry of first and second rolling contact surfaces;
Fig. 1 c   shows the deformed geometry of the first and second rolling contact surfaces when pressed together, including the Hertzian contact zone;
Fig. 1 d   shows the pressure distribution across the Herzian contact zone;
Fig. 1e   shows the pressure distribution across an elastohydrodynamically lubricated (EHL) contact, having a contact geometry in accordance with the invention.
Fig. 2a   is a cross-sectional view of a spherical roller bearing according to the invention;
Fig. 2b   is a side view of one of the spherical rollers from the bearing of Fig. 2a, having a modified roller geometry according to the invention;
Fig. 3   is a diagram of the difference in radius along the length of a roller with modified roller relative to an unmodified roller;
Fig. 4   is a diagram of the gap height along contact length in an unmodified contact interface and a modified contact interface according to the invention.

DETAILED DESCRIPTION

A bearing according to the invention comprises spherical rolling contact surfaces which are curved in a longitudinal direction, perpendicular to a circumferential direction. Specifically, the spherical geometry of a rolling contact interface is modified, such that during elastohydrodynamic lubrication conditions, a pressure gradient across a central portion of the rolling contact interface is reduced. As a result, side flow of a lubricant film, away from the contact centre, is minimized.

Side flow is illustrated in Fig. 1 a, which shows an example of an elastohydrodynamically lubricated (EHL) contact. Specifically, part of an inner ring 105 and a ball 125 from a deep-groove ball bearing are depicted. The inner ring has a spherical raceway 107, on which the balls will run in a circumferential direction, x. Further the raceway 107 is curved in the direction y, perpendicular thereto. An outer surface 126 of the ball 125 is designated as a first rolling contact surface and the inner raceway 107 is designated as a second rolling contact surface. The bearing is lubricated by a grease (not shown), which comprises e.g. a mineral base oil and a metal soap thickener. During bearing operation, a lubricating oil film forms between the ball rolling contact surface 126 and the inner raceway 107. Also, a contact pressure is exerted on the first and second rolling contact surfaces, causing local elastic deformation, which is indicated by the shaded region 130. A resulting pressure distribution across the EHL contact urges the oil in the lubricant film to flow to the sides of the raceway in the y-direction, as indicated by the arrows. Over time, the side flow leads to a starved lubrication regime at the contact centre.

An analytical model for concentrated contact between two isotropic, homogeneous, linear elastic solids with smooth surfaces was developed by Hertz. Fig. 1 b shows the undeformed geometry of first and second solids, whereby it is assumed that the first solid represents the rolling contact surface 126 of the ball 125 from Fig 1 a and the second solid represents the inner raceway 107. The undeformed geometry is defined by the radii of curvature in the principle directions (x, y). Thus the ball has a first radius of curvature $r_{x,rol}$ in circumferential direction (x) and has a second radius of curvature $r_{y,rol}$ in longitudinal direction (y). The undeformed geometry of the inner raceway 107 is defined by a first radius of curvature $r_{x,rw}$ in circumferential direction (x) and by a second radius of curvature $r_{y,rw}$ in longitudinal direction (y).

When the solids 126, 107 are pressed together with a force F directed normal to the surfaces, an approximately elliptic or circular contact area 130 is formed, as shown in Fig. 1 c. The aforementioned contact area 130 is typically referred to as the Hertzian contact zone

The resulting pressure distribution across the Hertzian contact zone 130 is depicted in Fig. 1 d, whereby

a represents a semi-axes Hertzian contact zone in x-direction;
b represents a semi-axes Hertzian contact zone in y-direction; and

$P_h$ represents a central Hertzian pressure

The pressure distribution is partly dependent on a gap height between the first and second rolling contact surfaces 126, 107. The gap height, in turn, is partly defined by the undeformed geometry of the surfaces. The gap height (h) as a function of position (x, y) on the contact area can be defined by the following expression:

$$h(x, y) = h_o + \frac{x^2}{2R_x} + \frac{y^2}{2R_y} + deformation \qquad \textit{[equation 1]}$$

where

$h_0$ is the gap of the undeformed surfaces at the centre of the contact (x=0; y=0);

x and y are coordinates in the corresponding directions;

$R_x$ is the reduced radius of curvature in x-direction, given by: $R_x = \left( r_{x,rol}^{-1} + r_{x,rw}^{-1} \right)^{-1}$ and

$R_y$ is the reduced radius of curvature in y-direction, given by: $R_y = \left( r_{y,rol}^{-1} + r_{y,rw}^{-1} \right)^{-1}$.

In a PhD thesis by one of the present inventors, entitled "Thin Layer Flow in Rolling Element Bearings, University of Twente, The Netherlands, 2009 [ISBN 978-90-365-2934-1], it has been demonstrated that side flow in an EHL contact increases as the ellipticity ratio increases.

Ellipticity ratio can be expressed as a ratio of the reduced radii of curvature in circumferential and longitudinal directions: $R_x / R_y$.

Thus, side flow can be minimized by maximizing $R_y$, such that a smaller ellipticity ratio is obtained. In the theoretical case of an infinitely long line contact, the amount of lubricant pushed to the side is zero. This concept is used to obtain the geometry according to the invention, for which the side flow in real bearing contacts is minimal. This is done by modifying the rolling contact geometry such that locally, the contact becomes a line contact. Mathematically this is done by setting the inverse of the reduced curvature in y direction, $R_y^{-1}$, to zero. In order to prevent large pressure spikes at the sides of the contact, $R_y^{-1}$ is set to zero only at y=0 and a cosine function is used to obtain a smooth transition. The modified reduced radius of curvature, which varies in the y-direction relative to a datum at y=0 at the contact centre, may be defined by:

$$\frac{1}{R_{y,new(y)}} = \frac{1}{R_y} - A\frac{1}{R_y}\cos\left( \pi\frac{y}{b_{ref}} \right) \qquad \textit{[equation 2]}$$

A is a tuning parameter (dimensionless);

$b_{ref}$ is a reference contact length (metres), preferably equal to the maximum semi-contact length, i.e. the semi-axes Herzian contact zone in y-direction (see Fig. 1 d); and

$R_y$ is an imaginary constant reduced radius of curvature defined between first and second endpoints of the contact interface.

Double integration of equation [2] with respect to y, and adding integration constant $A\,b_{ref}^2 \big/ \left( \pi^2 R_y \right)$ gives:

$$\frac{y^2}{2R_{y,new(y)}} = \frac{y^2}{2R_y} + A\frac{b_{ref}^2}{\pi^2 R_y}\left( \cos\left( \pi\frac{y}{b_{ref}} \right) - 1 \right) \qquad \textit{[equation 3]}$$

Therefore, the gap height in a modified EHL contact according to the invention can be obtained by replacing the third term on the right in Equation [1] with the new expression in Equation [3] for $\dfrac{y^2}{2R_{y,new(y)}}$.

This gives:

$$h(x, y) = h_0 + \frac{x^2}{2R_x} + \frac{y^2}{2R_y} + A\frac{b_{ref}^2}{\pi^2 R_y}\left(\cos\left(\pi\frac{y}{b_{ref}}\right) - 1\right) + deformation \qquad [equation\ 4]$$

Equation [4] was used to determine an optimal value of the tuning parameter. Specifically, equation [4] (in dimensionless format), provided the basis for calculating a rate of starvation (mass flow rate of oil in y direction) at the centre of a contact interface. Reference is made to "Thin Layer Flow in Rolling Element Bearings", equation [5.10], for the calculation of starvation rate.

A series of calculations was performed using an elastohydrodamic lubrication (EHL) solver for a contact interface in accordance with the invention in a spherical roller bearing of a particular size, lubricated with a certain grease, under a variety of load conditions and for different film thickness values. It has been found that the starvation rate is minimized when the tuning parameter, A, has a value of between 0.7 and 1.0. The lowest rate of starvation was obtained when A = 1.0. It has also been found that the tuning parameter is essentially unaffected by the magnitude of the load and the film thickness.

In the series of calculations, the starvation rate with A=0 was also calculated, i.e. for a bearing with an unmodified contact interface. The calculated rate of starvation was significantly higher than for a bearing with a modified contact interface in accordance with the invention.

Further, the pressure distribution across an EHL contact with modified geometry in accordance with the invention was calculated using the EHL solver. The results are shown in the diagram of Figure 1 e, wherein a first axis 150 represents pressure P [dimensionless], and second and third axes 160, 170 define a plane of contact (X, Y) [dimensionless]. The calculation was performed for a maximum load case and using a tuning parameter value of 0.9.

As may be seen, in a central region T of the contact, in Y-direction, a flattened pressure differential is observed. The resulting reduction in mass flow rate away from the contact centre leads to a thicker film at a certain time (or to a longer duration before the film thickness decays to a critical value). As a result, grease life is enhanced.

The modified geometry in accordance with the invention, i.e. the new reduced radius of curvature defined in equation [2], can be obtained by varying one or both of the second radius of curvature of opposing rolling contact surfaces. In other words, referring again to Figure 1 b, one or both of $r_{y,rol}$ and $r_{y,rw}$ can be varied.

Preferably, the second radius of curvature of only one rolling contact surface is modified. In the example of Fig. 1 a, in which the rolling elements are balls, the raceway geometry is suitably modified. This is because the balls spin about several different axes during bearing operation, meaning that the contact geometry between the ball and raceway would not remain constant if the second radius of curvature of the ball were modified.

In a roller bearing, the rollers do spin about a fixed axis relative to the bearing raceways, meaning that roller geometry or raceway curvature can be modified while retaining an invariant contact geometry. When raceway geometry is modified, it is preferable to modify the geometry of both the inner raceway and the outer raceway, although a reduction in side flow will still be obtained when the geometry of only one raceway is modified in accordance with the invention. For ease of manufacture, a preferred embodiment of a roller bearing according to the invention comprises one or more rollers with a modified geometry.

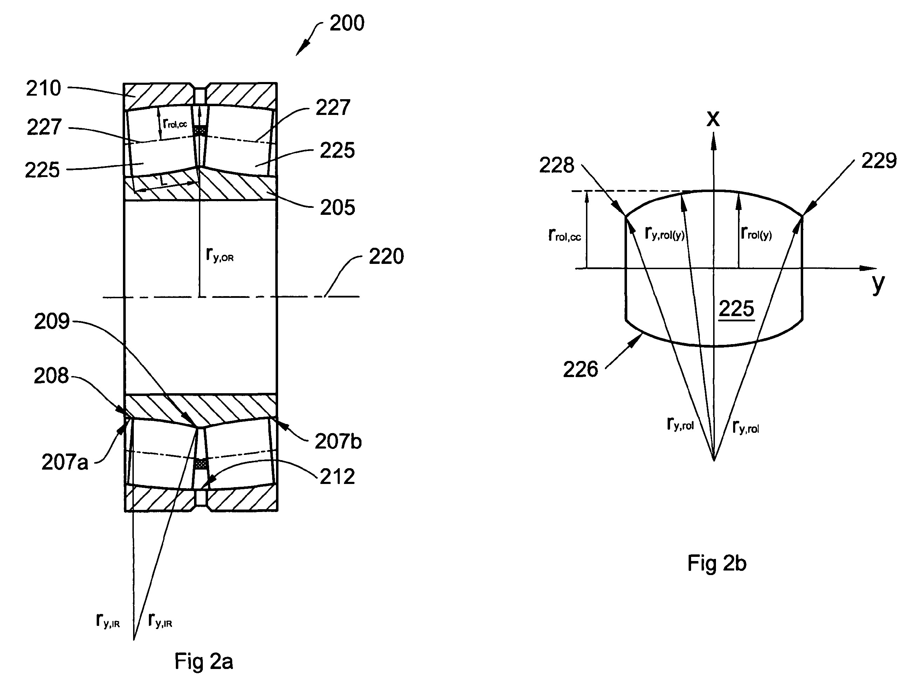

A side view of an example of such a bearing is shown in Fig. 2a. Further, a roller with modified geometry is depicted in Fig. 2a, in relation to a coordinate system (x, y). The bearing 200 is a spherical roller bearing, comprising an outer ring 210 with a single, spherical outer raceway 212. The outer raceway has a constant radius of curvature, $r_{y,OR}$, in a longitudinal direction (y), perpendicular to a circumferential direction (x) of the outer raceway 212. Further, the bearing has an inner ring 205, with 1st and 2nd inner raceways 207a, 207b. The first and second inner raceways are inclined at an angle to a rotational axis 220 of the bearing, and each inner raceway has a constant radius of curvature, $r_{y,IR}$, in the longitudinal direction. For simplicity's sake, only the radius of curvature of the first inner raceway 207a is shown, which is equal in magnitude to the radius of curvature of the second inner raceway. Further, the inner raceway radius of curvature, $r_{y,IR}$, is equal in magnitude to the outer raceway radius of curvature, $r_{y,OR}$.

The bearing further comprises a first row and second row of spherical rollers 225, which are disposed between the outer raceway 212 and the first and second inner raceways 207a, 207b. Preferably, each roller 225 has a modified geometry in accordance with invention, having a radius of curvature that varies along the roller length, $r_{y,rol(y)}$. The rollers have a rolling contact surface 226 and, during bearing operation, each roller spins about its own roller axis 227. Further, the rolling contact surface 226 of each roller has an effective length, L, defined between first and second endpoints of contact 228, 229 with a raceway. As will be understood, the terms first and second endpoints refer to a locus of corresponding points, in view of the circular geometry of the roller.

Each raceway also has an effective contact length, equal to the roller effective contact length, L. The effective length of a raceway is defined between first and second endpoints of contact with the rollers. For simplicity, only the first endpoint 208 and the second endpoint 209 on the first inner raceway 107a are shown. Again these endpoints are to be understood as a locus of points. Thus, a contact interface is defined between the effective contact length of a roller and the effective contact length of a raceway.

Due to the spherical nature of the rolling contact surfaces, the raceways 107a, 107b, 112 and the rollers 125 have a radius, which varies relative to a rotational axis of symmetry. For the rollers, the rotational axis of symmetry is the roller axis 227. For purely spherical rolling contact surfaces, the radius of a roller changes as a function of contact length, relative to a datum at the contact centre, according to the following relationship:

$$r_{rol}(y) = r_{x,rol} + \sqrt{r_{y,rol}^2 - y^2} - r_{y,rol}$$

wherein

$r_{rol,cc}$ is the radius of the roller at the contact centre, i.e. at y = 0

y is a coordinate value in the longitudinal direction; perpendicular to the circumferential direction; and

$r_{y,rol}$ is a constant radius of curvature of the roller in longitudinal direction, defined between the first and second endpoints of contact 228, 229.

The modified roller radius according to the invention is obtained by using the fourth term on the R.H.S. of Equation [4] as an adjustment factor.

The following relationship is obtained for roller radius according to the invention:

$$r_{rol,new}(y) = r_{rol}(y) + \Delta r_{rol}(y)$$

with

$$\Delta r_{rol}(y) = -A \frac{b_{ref}^2}{\pi^2 R_y} \left( \cos\left( \pi \frac{y}{b_{ref}} \right) - 1 \right)$$

wherein:

A is the tuning parameter, preferably equal to one;

$b_{ref}$ is the reference contact length, preferably equal to L/2; and

$R_y$ is the imaginary constant reduced radius of curvature of the rolling contact surfaces, in y-direction, given by

$$R_y = \left( r_{y,rol}^{-1} + r_{y,rw}^{-1} \right)^{-1}$$

where

$r_{y,roi}$ is an imaginary, constant radius of curvature in y-direction that extends between the first endpoint 228 and the second endpoint 229 on the rolling contact surface 226 of the roller 225;

$r_{y,rw}$ is the constant radius of curvature in y-direction that extends between the first and second endpoints of contact on the raceway.

In the depicted example, where the inner and outer raceways have an equal curvature, $r_{y,rw} = r_{y,IR} = r_{y,OR}$.

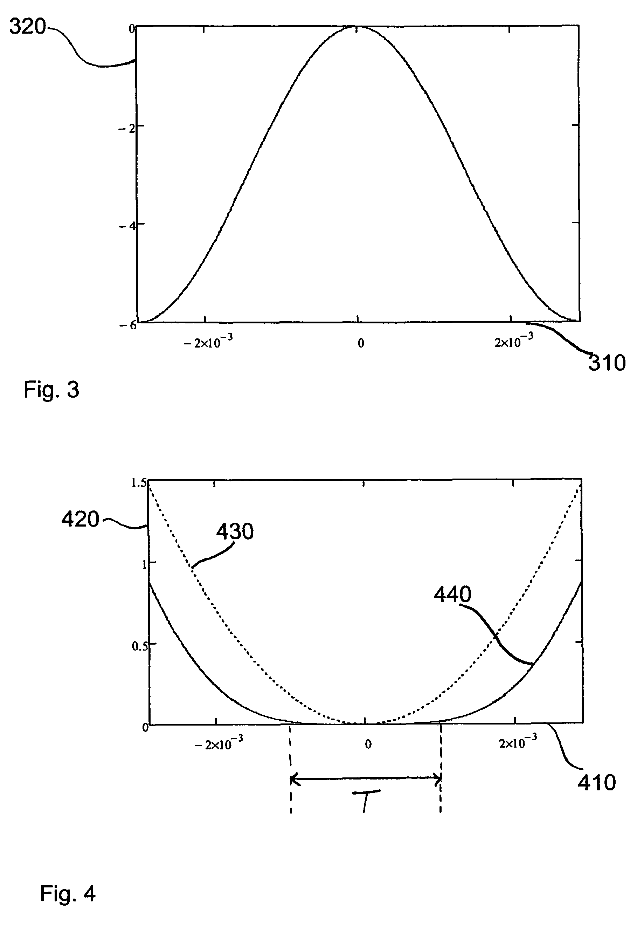

The actual change in geometry, relative to the purely spherical, is small. A spherical roller bearing with an outside diameter of 50 mm and raceways with an effective contact length of 5 mm will be used as an example. The maximum difference in radius between an "unmodified" roller and a modified roller in accordance with the invention is approximately 6 microns. The difference is shown in the diagram of Fig. 3, wherein a first axis 310 represents contact length [metres] and a second axis 320 represents the difference in radius [microns] of a roller according to the invention, relative to an unmodified roller that has the same radius at the contact centre.

As can be seen from Fig. 3, the difference in radius becomes greater towards the edges of the roller. Also, the negative differences indicate that a roller according to the invention has relatively larger radius values. In other words, a modified roller has "extra" material in relation to an unmodified roller. The different geometry causes a corresponding difference in gap height between the rolling contact surfaces. This latter difference is shown in Fig. 4, wherein a first axis 410 represents contact length [metres] and a second axis 420 represents the undeformed gap height [microns] of a contact interface. The dotted line 430 shows the gap height along the contact length between purely spherical rolling contact surfaces. The solid line 440 shows the gap height along the contact length between a purely spherical raceway and a roller with modified geometry as shown in Fig. 3.

As can be seen from Fig. 4, the effect of the invention is that in the central region T of the contact, the gap is essentially flattened. The undeformed contact geometry between the spherical rolling contact surfaces thus approximates a line contact. As explained earlier, the resulting decrease in elipticity ratio reduces the rate of side flow away from the central region T, thereby enhancing grease life and bearing life.

A number of aspects/embodiments of the invention have been described. It is to be understood that each aspect/embodiment may be combined with any other aspect/embodiment. The invention may thus be varied within the scope of the accompanying patent claims.

Reference numerals

Figs. 1a - 1e

| | | |
|---|---|---|
| 105 | Bearing inner ring |
| 107 | Inner raceway (second rolling contact surface) |
| 125 | Ball |
| 126 | Rolling contact surface of ball (first rolling contact surface) |
| 130 | Herzian contact zone |
| 150 | First axis representing Pressure (dimensionless) |
| 160 | Second axis defining a plane of contact in X-direction (dimensionless) |
| 170 | Third axis defining a plane of contact in Y-direction (dimensionless) |
| x | Circumferential direction |
| y | Longitudinal direction |
| $r_{x,rol}$ | Radius of curvature in circumferential direction (first radius of curvature) of rolling element |
| $r_{y,rol}$ | Radius of curvature in longitudinal direction (second radius of curvature) of rolling element |
| $r_{x,rw}$ | Radius of curvature in circumferential direction (first radius of curvature) of inner raceway |
| $r_{y,rw}$ | Radius of curvature in longitudinal direction (second radius of curvature) of of inner raceway |

Figs 2a -2b

| | | |
|---|---|---|
| 200 | Spherical roller bearing |
| 205 | Bearing inner ring |
| 207a | 1st inner raceway (second rolling contact surface) |
| 207b | 2nd inner raceway (second rolling contact surface) |
| 208 | 1st endpoint of second rolling contact surface |
| 209 | 2nd endpoint of second rolling contact surface |
| 210 | Bearing outer ring |
| 212 | Outer raceway (second rolling contact surface) |
| 220 | Bearing axis of rotation |
| 225 | Spherical roller |
| 226 | Rolling contact surface of roller (first rolling contact surface) |
| 227 | Axis of rotation of roller |
| 228 | 1st endpoint of first rolling contact surface |
| 229 | 2nd endpoint of first rolling contact surface |

| | | |
|---|---|---|
| L | Effective contact length |
| $r_{y,IR}$ | Second radius of curvature of inner raceway |
| $r_{y,OR}$ | Second radius of curvature of outer raceway |
| $r_{,rol,cc}$ | Radius of roller at contact centre (at y=0) |
| $r_{rol}(y)$ | Radius of roller at position y |
| $r_{y,rol}$ | Second radius of curvature of roller, defined between 1st and 2nd end points of contact |

$r_{y,rol}(y)$    Second radius of curvature of roller at position y

Fig. 3

310    First axis representing contact length (metres)
320    Second axis representing the difference in roller radius of a roller according to the invention relative to an unmodified roller with equal roller radius at the contact centre.

Fig. 4

410    First axis representing contact length (metres)
420    Second axis representing gap height between 1st and 2nd rolling contact surfaces
430    First curve showing gap height with purely spherical 1st and 2nd rolling contact surfaces
440    Second curve showing gap height with a purely spherical raceway and a roller according to the invention.

## Claims

1.  Rolling element bearing (200) comprising a plurality of rolling elements (125, 225) disposed between an outer bearing raceway (212) and an inner bearing raceway (107, 207a, 207b), in which:

    • the rolling elements comprise a first rolling contact surface (126, 226);
    • the inner bearing raceway and the outer bearing raceway comprise a second rolling contact surface; and
    • the first and second rolling contact surfaces are curved in a longitudinal direction (y);

    wherein
    at least one of the first and second rolling contact surfaces, which together form a contact interface, has a varying radius of curvature ($r_{rol(y)}$) in longitudinal direction, **characterised in that** a reduced radius of curvature of the contact interface, in longitudinal direction, $R_{y,new}(y)$, varies as a function of contact length according to a predetermined relationship, given by:

    $$\frac{1}{R_{y,new(y)}} = \frac{1}{R_y} - A\frac{1}{R_y}\cos\left(\pi\frac{y}{b_{ref}}\right)$$

    wherein,

    y is a coordinate in longitudinal direction, where y=0 at a centre of the contact interface;
    A is a tuning factor;
    $b_{ref}$ is a reference contact length, equal to half of the effective contact length (L);
    $R_y$ is an imaginary, constant reduced radius of curvature of the contact interface

    in longitudinal direction, calculated according to:

    $$R_y = \left(r_{y,rol}^{-1} + r_{y,rw}^{-1}\right)^{-1},$$

    wherein

    $r_{y,rol}$ is a constant radius of curvature in longitudinal direction, defined between 1st and 2nd endpoints of contact (228, 229) on the first rolling contact surface of the contact interface; and
    $r_{y,rw}$ is a constant radius of curvature, defined between the 1st and 2nd endpoints of contact (208, 209) on the second rolling contact surface of the contact interface.

2.  Bearing according to claim 1, wherein the first and second rolling contact surfaces of the contact interface comprise a varying radius of curvature in longitudinal direction.

3. Bearing according to claim 1, wherein the first rolling contact surface (126, 226) of the contact interface comprises a varying radius of curvature in longitudinal direction ($r_{y,rol(y)}$), and the second rolling contact surface (107, 207a, 207b, 212) of the at least one contact interface comprises a constant radius of curvature in longitudinal direction.

4. Bearing according to claim 1, wherein the second rolling contact surface (107, 207a, 207b, 212) of the contact interface comprises a varying radius of curvature in longitudinal direction, and the first rolling contact surface (126, 226) of the contact interface comprises a constant radius of curvature in the longitudinal direction.

5. Bearing according to claim 4, wherein the bearing is a ball bearing.

6. Bearing according to any of claims 1 to 4, wherein the bearing is a spherical roller bearing or a toroidal roller bearing.

7. Bearing according to any of claims 3 to 6, wherein the rolling contact surface with the varying radius of curvature in longitudinal direction has a radius, $r_{rcs,new}$, relative to a rotational axis of symmetry of that rolling contact surface, which changes in the longitudinal direction (y) according to the following relationship:

$$r_{rcs,new}(y) = r_{rcs}(y) + \Delta r_{rcs}(y)$$

wherein:

$$r_{rcs}(y) = r_{rcs,cc} + \sqrt{r_{y,rcs}^2 - y^2} - r_{y,rcs}$$

$F_{rcs,cc}$ is the radius of the rolling contact surface at the contact centre (y=0);
$r_{y,rcs}$ is an imaginary constant radius of curvature in longitudinal direction, defined between the first and second endpoints of contact on the rolling contact surface; and
$\Delta r_{rcs}(y)$ is a correction factor.

8. Bearing according to claim 7, in which the rolling contact surface with the varying radius of curvature is a first rolling contact surface (226) of a rolling element (225) or a second rolling contact surface of the inner bearing raceway (107, 207a, 207b) and the correction factor is given by:

$$\Delta r_{rcs}(y) = -A \frac{b_{ref}^2}{\pi^2 R_y} \left( \cos\left( \pi \frac{y}{b_{ref}} \right) - 1 \right)$$

wherein:

y is the coordinate in longitudinal direction;
A is the tuning factor;
$b_{ref}$ is the reference contact length; and
$R_y$ is the imaginary, constant reduced radius of curvature in longitudinal direction of the contact interface.

9. Bearing according to claim 7, in which the rolling contact surface with the varying radius of curvature is a second rolling contact surface of the bearing outer raceway (212) and the correction factor is given by:

$$\Delta r_{rcs}(y) = A \frac{b_{ref}^2}{\pi^2 R_y} \left( \cos\left( \pi \frac{y}{b_{ref}} \right) - 1 \right)$$

wherein:

y is the coordinate in longitudinal direction;
A is the tuning factor;

$b_{ref}$ is the reference contact length; and

$R_y$ is the imaginary, constant reduced radius of curvature in longitudinal direction of the contact interface.

10. Bearing according to any preceding claim, wherein the tuning parameter, A, has a value of between 0.7 and 1.0.

11. Bearing according to any preceding claim, wherein the bearing comprises a grease lubricant.

**Patentansprüche**

1. Wälzlager (200), umfassend eine Vielzahl von Wälzkörpern (125, 225), die zwischen einem äußeren Lagerlaufring (212) und einem inneren Lagerlaufring (107, 207a, 207b) angeordnet sind, wobei:

   • die Wälzkörper eine erste Wälzlager-Kontaktoberfläche (126, 226) umfassen;
   • der innere Lagerlaufring und der äußere Lagerlaufring eine zweite Rollkontaktoberfläche umfassen; und
   • die erste und die zweite Wälzlager-Kontaktoberfläche in einer Längsrichtung (y) gekrümmt sind;

   wobei
   mindestens eine der ersten und zweiten Wälzlager-Kontaktoberflächen, die zusammen eine Kontaktschnittstelle bilden, einen variierenden Krümmungsradius ($r_{rol(y)}$) in Längsrichtung bilden, **dadurch gekennzeichnet, dass** ein verringerter Krümmungsradius der Kontaktschnittstelle in Längsrichtung, $R_{y,new}(y)$, in Abhängigkeit von der Kontaktlänge gemäß einer vorbestimmten Beziehung variiert, die vorgegeben wird durch:

   $$\frac{1}{R_{y,new(y)}} = \frac{1}{R_y} - A\frac{1}{R_y}\cos\left(\pi\,\frac{y}{b_{ref}}\right)$$

   wobei

   y eine Koordinate in Längsrichtung ist, wobei y=0 in einer Mitte der Kontaktschnittstelle beträgt;
   A ein Einstellfaktor ist;
   $b_{ref}$ eine Referenzkontaktlänge ist, die der Hälfte der effektiven Kontaktlänge (L) entspricht;
   $R_y$ ein imaginärer, konstanter, verringerter Krümmungsradius der Kontaktschnittstelle in Längsrichtung ist, der wie folgt berechnet wird:

   $$R_y = \left(r_{y,rol}^{-1} + r_{y,rw}^{-1}\right)^{-1},$$

   wobei

   $r_{y,rol}$ ein konstanter Krümmungsradius in Längsrichtung ist, der zwischen ersten und zweiten Endpunkten des Kontakts (228, 229) auf der ersten Wälzlager-Kontaktoberfläche der Kontaktschnittstelle definiert wird; und
   $r_{y,rw}$ ein konstanter Krümmungsradius ist, der zwischen ersten und zweiten Endpunkten des Kontakts (208, 209) auf der zweiten Wälzlager-Kontaktoberfläche der Kontaktschnittstelle definiert wird.

2. Lager nach Anspruch 1, wobei die erste und die zweite Wälzlager-Kontaktoberfläche der Kontaktschnittstelle einen variierenden Krümmungsradius in Längsrichtung umfassen.

3. Lager nach Anspruch 1, wobei die erste Wälzlager-Kontaktoberfläche (126, 226) der Kontaktschnittstelle einen variierenden Krümmungsradius in Längsrichtung aufweist ($r_{y,rol(y)}$) und die zweite Wälzlager-Kontaktoberfläche (107, 207a, 207b, 212) der mindestens einen Kontaktschnittstelle einen konstanten Krümmungsradius in Längsrichtung umfasst.

4. Lager nach Anspruch 1, wobei die zweite Wälzlager-Kontaktoberfläche (107, 207a, 207b, 212) der Kontaktschnittstelle einen variierenden Krümmungsradius in Längsrichtung aufweist und die erste Wälzlager-Kontaktoberfläche (126, 226) der mindestens einen Kontaktschnittstelle einen konstanten Krümmungsradius in Längsrichtung umfasst.

5. Lager nach Anspruch 4, wobei das Lager ein Kugellager ist.

6. Lager nach einem der Ansprüche 1 bis 4, wobei das Lager ein sphärisches Wälzlager oder ein toroidales Wälzlager ist.

7. Lager nach einem der Ansprüche 3 bis 6, wobei die Wälzlager-Kontaktoberfläche mit dem variierenden Krümmungsradius in Längsrichtung einen Radius, $r_{rcs,new}$, relativ zu einer Drehsymmetrieachse der Wälzlager-Kontaktoberfläche aufweist, der sich in Längsrichtung (y) gemäß der folgenden Beziehung ändert:

$$r_{rcs,new}(y) = r_{rcs}(y) + \Delta r_{rcs}(y)$$

wobei:

$$r_{rcs}(y) = r_{rcs,cc} + \sqrt{r_{y,rcs}^2 - y^2} - r_{y,rcs}$$

$r_{rcs,cc}$ der Radius der Wälzlager-Kontaktoberfläche in der Kontaktmitte (y=0) ist;
$r_{y,rcs}$ ein imaginärer konstanter Krümmungsradius in Längsrichtung ist, der zwischen den ersten und zweiten Endpunkten des Kontakts auf der Wälzlager-Kontaktoberfläche definiert wird; und
$\Delta r_{rcs}(y)$ ein Korrekturfaktor ist.

8. Lager nach Anspruch 7, wobei die Wälzlager-Kontaktoberfläche mit dem variierenden Krümmungsradius eine erste Wälzlager-Kontaktoberfläche (226) eines Wälzkörpers (225) oder einer zweiten Wälzlager-Kontaktoberfläche des inneren Lagerlaufrings (107, 207a, 207b) ist und der Korrekturfaktor vorgegeben wird durch:

$$\Delta r_{rcs}(y) = -A \frac{b_{ref}^2}{\pi^2 R_y} \left( \cos\left( \pi \frac{y}{b_{ref}} \right) - 1 \right)$$

wobei:

y die Koordinate in Längsrichtung ist;
A der Einstellfaktor ist;
$b_{ref}$ die Referenzkontaktlänge ist; und
$R_y$ der imaginäre, konstante verringerte Krümmungsradius in Längsrichtung der Kontaktschnittstelle ist.

9. Lager nach Anspruch 7, wobei die Wälzlager-Kontaktoberfläche mit dem variierenden Krümmungsradius eine zweite Wälzlager-Kontaktoberfläche des äußeren Lagerlaufrings (212) ist und der Korrekturfaktor vorgegeben wird durch:

$$\Delta r_{rcs}(y) = A \frac{b_{ref}^2}{\pi^2 R_y} \left( \cos\left( \pi \frac{y}{b_{ref}} \right) - 1 \right)$$

wobei:

y die Koordinate in Längsrichtung ist;
A der Einstellfaktor ist;
$b_{ref}$ die Referenzkontaktlänge ist; und
$R_y$ der imaginäre, konstante verringerte Krümmungsradius in Längsrichtung der Kontaktschnittstelle ist.

10. Lager nach einem der vorhergehenden Ansprüche, wobei der Einstellparameter, A, einen Wert zwischen 0,7 und 1,0 aufweist.

**11.** Lager nach einem der vorhergehenden Ansprüche, wobei das Lager ein Fettschmiermittel umfasst.


**Revendications**

**1.** Palier (200) à éléments roulants comprenant une pluralité d'éléments roulants (125, 225) disposés entre un chemin de roulement extérieur (212) et un chemin de roulement intérieur (107, 207a, 207b), dans lequel :

- les éléments roulants comprennent une première surface de contact de roulement (126, 226) ;
- le chemin de roulement intérieur et le chemin de roulement extérieur comprennent une seconde surface de contact de roulement ; et
- les première et seconde surfaces de contact de roulement sont courbes dans une direction longitudinale (y),

dans lequel au moins une des première et seconde surfaces de contact de roulement, qui forment ensemble une interface de contact, a un rayon de courbure ($r_{rol(y)}$) variable dans la direction longitudinale, **caractérisé en ce qu'**un rayon de courbure réduit de l'interface de contact, dans la direction longitudinale, $R_{y,new}(y)$, varie en fonction de la longueur de contact selon une relation prédéterminée, donnée par :

$$\frac{1}{R_{y,new(y)}} = \frac{1}{R_y} - A\frac{1}{R_y}\cos\left(\pi\frac{y}{b_{ref}}\right)$$

dans laquelle :

y est une coordonnée dans la direction longitudinale, où y = 0 au centre de l'interface de contact ;
A est un coefficient de réglage ;
$b_{ref}$ est une longueur de contact de référence, égale à la moitié de la longueur effective de contact (L) ;
$R_y$ est un rayon de courbure réduit imaginaire, constant de l'interface de contact dans la direction longitudinale, calculé selon la formule :

$$R_y = \left(r_{y,rol}^{-1} + r_{y,rw}^{-1}\right)^{-1}$$

dans laquelle :

$r_{y,roi}$ est un rayon de courbure constant dans la direction longitudinale, défini entre les premier et second points limites de contact (228, 229) sur la première surface de contact de roulement de l'interface de contact ; et
$r_{y,rw}$ est un rayon de courbure constant, défini entre les premier et second points limites de contact (208, 209) sur la seconde surface de contact de roulement de l'interface de contact.

**2.** Palier selon la revendication 1, dans lequel les première et seconde surfaces de contact de roulement de l'interface de contact comprennent un rayon de courbure variable dans la direction longitudinale.

**3.** Palier selon la revendication 1, dans lequel la première surface de contact de roulement (126, 226) de l'interface de contact comprend un rayon de courbure ($r_{y,rol(y)}$) variable dans la direction longitudinale et la seconde surface de contact de roulement (107, 207a, 207b, 212) de ladite interface de contact comprend un rayon de courbure constant dans la direction longitudinale.

**4.** Palier selon la revendication 1, dans lequel la seconde surface de contact de roulement (107, 207a, 207b, 212) de l'interface de contact comprend un rayon de courbure variable dans la direction longitudinale et la première surface de contact de roulement (126, 226) de l'interface de contact comprend un rayon de courbure constant dans la direction longitudinale.

**5.** Palier selon la revendication 4, dans lequel le palier est un roulement à billes.

**6.** Palier selon l'une quelconque des revendications 1 à 4, dans lequel le palier est un roulement à rotule sur rouleaux ou un roulement toroïdal sur rouleaux.

**7.** Palier selon l'une quelconque des revendications 3 à 6, dans lequel la surface de contact de roulement ayant le rayon de courbure variable dans la direction longitudinale a un rayon, $r_{rcs,new}$, par rapport à un axe de rotation de symétrie de ladite surface de contact de roulement, qui varie dans la direction longitudinale (y) selon la relation suivante :

$$r_{rcs,new}(y) = r_{rcs}(y) + \Delta r_{rcs}(y)$$

dans laquelle :

$$r_{rcs}(y) = r_{rcs,cc} + \sqrt{r_{y,rcs}^2 - y^2} - r_{y,rcs}$$

$r_{rcs,cc}$ est le rayon de la surface de contact de roulement au centre de contact (y = 0) ;
$r_{y,rcs}$ est un rayon de courbure constant imaginaire dans la direction longitudinale, défini entre les premier et second points limites de contact sur la surface de contact de roulement ; et
$\Delta r_{rcs}(y)$ est un facteur de correction.

**8.** Palier selon la revendication 7, dans lequel la surface de contact de roulement ayant le rayon de courbure variable est une première surface de contact de roulement (226) d'un élément roulant (225) ou une seconde surface de contact de roulement du chemin de roulement intérieur (107, 207a, 207b) et le facteur de correction est donné par :

$$\Delta r_{rcs}(y) = -A \frac{b_{ref}^2}{\pi^2 R_y} \left( \cos\left( \pi \frac{y}{b_{ref}} \right) - 1 \right)$$

où :

y est la coordonnée dans la direction longitudinale ;
A est le coefficient de réglage ;
$b_{ref}$ est la longueur de contact de référence ; et
$R_y$ est le rayon de courbure réduit, imaginaire, constant dans la direction longitudinale de l'interface de contact.

**9.** Palier selon la revendication 7, dans lequel la surface de contact de roulement ayant le rayon de courbure variable est une seconde surface de contact de roulement du chemin de roulement extérieur (212) et le facteur de correction est donné par :

$$\Delta r_{rcs}(y) = A \frac{b_{ref}^2}{\pi^2 R_y} \left( \cos\left( \pi \frac{y}{b_{ref}} \right) - 1 \right)$$

où :

y est la coordonnée dans la direction longitudinale ;
A est le coefficient de réglage ;
$b_{ref}$ est la longueur de contact de référence ; et
$R_y$ est le rayon de courbure réduit, imaginaire, constant dans la direction longitudinale de l'interface de contact.

**10.** Palier selon l'une quelconque des revendications précédentes, dans lequel le paramètre de réglage, A, a une valeur comprise entre 0,7 et 1,0.

11. Palier selon l'une quelconque des revendications précédentes, dans lequel le palier comprend une graisse lubrifiante.

Fig 1a

**Fig 1b**

**Fig 1c**

**Fig 1d**

EP 2 655 906 B1

Fig. 1e

EP 2 655 906 B1

Fig 2b

Fig 2a

20

320

310

Fig. 3

420

430

440

410

$T$

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4929098 A
- US 4557613 A

- US 2142478 A

### Non-patent literature cited in the description

- Thin Layer Flow in Rolling Element Bearings. University of Twente, 2009